Europäisches Patentamt

European Patent Office

Office européen des brevets

(11) Publication number: **0 155 325**
**B1**

## EUROPEAN PATENT SPECIFICATION

(45) Date of publication of patent specification: **10.01.90**

(51) Int. Cl.⁵: **F 16 D 41/06**

(21) Application number: **84903369.1**

(22) Date of filing: **11.09.84**

(86) International application number:
**PCT/JP84/00438**

(87) International publication number:
**WO 85/01333 28.03.85 Gazette 85/08**

(54) **OVERRUNNING CLUTCH.**

(30) Priority: **12.09.83 JP 142406/83 u**

(43) Date of publication of application:
**25.09.85 Bulletin 85/39**

(45) Publication of the grant of the patent:
**10.01.90 Bulletin 90/02**

(84) Designated Contracting States:
**DE FR GB**

(56) References cited:
**EP-A-0 015 674**
**GB-A- 212 880**
**JP-B-37 015 061**
**JP-U-53 018 445**
**US-A-3 820 640**

(73) Proprietor: **MITSUBISHI DENKI KABUSHIKI
KAISHA**
**2-3, Marunouchi 2-chome Chiyoda-ku**
**Tokyo 100 (JP)**

(72) Inventor: **YABUNAKA, Kiyoshi Mitsubishi Denki
Kabushiki**
**Kaisha Himeji Seisakusho 840, Chiyoda-cho**
**Himeji-shi Hyogo 670 (JP)**

(74) Representative: **Lehn, Werner, Dipl.-Ing. et al
Hoffmann, Eitle & Partner Patentanwälte
Arabellastrasse 4
D-8000 München 81 (DE)**

## Description

Technical field

The present invention relates to an overrunning clutch.

Background technique

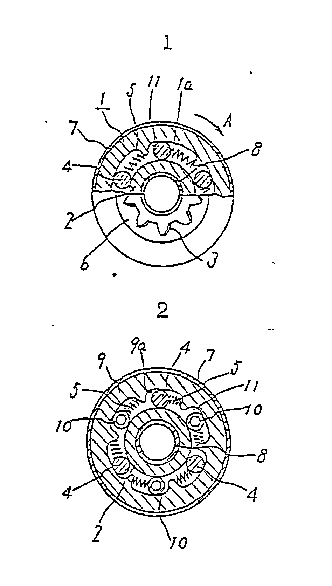

A clutch of this kind is disclosed in JP—U— 53,18445 (1978) and is shown in Fig. 1. Indicated by reference numeral 1, in Fig. 1, is a cylindrical drive member which is connected to the armature shaft (although not shown) of a starting motor. The drive member 1 is formed therein with a plurality of taper notches 1a which are arranged equidistantly on the inner circumference thereof. Indicated at numeral 2 is a rotating shaft which defines wedge-shaped spaces 11 between itself and the inner circumference of the drive member 1. The rotating shaft 2 is equipped at its other end portion with a pinion 3 which meshes with the ring gear of a not-shown engine. Indicated at numeral 4 are column-shaped friction rollers which are fitted movably in the aforementioned wedge-shaped spaces 11. Indicated at numeral 5 are springs for urging the friction rollers 4 toward the narrower portions of the aforementioned wedge-shaped spaces 11. Numeral 6 indicates a split washer, and numeral 7 indicates a cover which assembles the aforementioned respective members into engagement and which is caulked to the drive member 1. Indicated at numeral 8 is a sleeve bearing which is fitted in the inner circumference of the rotating shaft 2 and which is fitted loosely on the aforementioned armature shaft in a rocking manner.

The operations of the structure thus far described will be explained in the following. If the starting motor is energized so that the drive member 1 is turned in the direction of arrow A of Fig. 1, the friction rollers 4 roll on their axes to bite into the wedge-shaped spaces 11 so that the rollers 4 perform wedge actions to combine the drive member 1 and the rotating shaft 2 by their frictional forces, whereby the drive member 1, the friction rollers 4 and the rotating shaft 2 rotate all together. As a result, the ring gear of the engine is driven to start the engine through the pinion 3 which is fixed on the other end of the rotating shaft 2. After this engine start, the rotating shaft 2 rotates in the direction of the arrow A at a higher speed than that of the drive member 1 to release the aforementined combination. More specifically, the friction rollers 4 are released from the wedge actions against the urging forces of the springs 5 so that the rotating shaft 2 and the pinion 3 rotate idly.

The mechanism of the prior art has the construction described. In case, however, the wedge-shaped spaces 11 are to be set to have a necessary biting angle (which is determined depending upon the coefficient of friction) so as to effect the necessary one-way engaging action, the mechanism of the prior art has defects such as difficulty in satisfying all the necessary functions (e.g., the repeatedly meshing function or the automatically centering function of the torque to be transmitted).

A second prior art that is of interest is US—A— 3 820 640, but as its relevance can only be appreciated after the present invention has been disclosed a comment on it appears later in this specification.

Disclose of the invention

The present invention provides an overrunning clutch that damps shock loads during power transmission from the clutch over run state to the clutch fully coupled state by making the elasticities of the respective friction rollers to be brought into engagement with the wedge-shaped spaces different.

The invention is defined in the accompanying Claim 1.

Brief description of the drawing

Fig. 1 is a partially sectional view showing the overrunning clutch of the prior art; and Fig. 2 is a sectional view showing one embodiment of the present invention.

Best mode for practising the invention

In Fig. 2, reference numeral 9 indicates a drive member which is formed with taper notches 9a at six positions in its inner circumference. Indicated at numerals 4 and 10, respectively, are friction rollers which are made of solid column members and hollow cylindrical members and which are arranged alternately at three positions in the aforementioned notches 9a. The friction rollers 10 are made hollow so that they have such characteristics as are more liable to be elastically deformed than the other friction rollers 4. Incidentally, since the remaining construction is similar to that described in connection with the mechanism of the prior art of Fig. 1, its description is omitted.

The operations of the overrunning clutch shown in Fig. 2 will be explained in the following.

When the drive member 9 is turned in the direction of the arrow A by the starting motor, the hollow friction rollers 10 are at first elastically deformed to easily bite into the wedge-shaped spaces thereby to couple the drive member 9 and the rotating shaft 2, and then the solid friction rollers 4 of higher rigidity bite into the wedge-shaped spaces to transmit the necessary rotating force.

Thus, the transmission of the rotating force of the mechanism is conducted smoothly in the two steps to give the mechanism such effects that the shocking load during the power transmission is damped and that the transition of the rotating shaft 2 from the idle state (i.e., the overrun state) to the recombined state in which the rotating force is coupled again is done more smoothly.

Incidentally, the foregoing description is directed to the case in which the elastically deformable friction rollers 10 are made of the hollow cylindrical members whereas the other friction rollers 4 are made of the solid column members. However, similar effects can be attained even in case the friction rollers 4 and 10 are made of solid cylindrical rollers each having different moduli of elasticity.

Morever, the foregoing description is also directed to the overrunning clutch of the six roller type, in which the wedge-shaped spaces are arranged at the six positions. The overrunning clutch may be of another type having four or eight rollers.

Industrial applicability

The present invention is applicable especially to the overrunning clutch which is used with the starter of the internal combustion engine, but can also be applied to the overrunning clutch which is used with other industrial machines.

Having now disclosed the present invention, it is of interest to note that US—A—3 820 640 discloses an overrun cluth that has a plurality of tapered notches like those of the present invention. In each notch is a roller, the arrangement being such that the rollers are all in abutting relationship with each other. At least one of the rollers is a spring roller or an elastic roller. It serves two purposes. The first is to bias all of the abutting rollers towards the smallest end of the notch in which they are housed. To enable the or each spring roller to do this it is always in abutting relationship with the widest end of the notch within which it is housed in order to have a reaction wall against which it can thrust to push all of the other rollers ahead of it towards the smallest end of the respective notches. When there is only one spring roller in the clutch it attempts to force the shaft member of the clutch towards an eccentric position away from the spring roller to further aid the rollers diametrically opposite the spring roller in wedging or locking the drive shaft to the driven part of the clutch when rotating in the locking direction.

EP—A—0 15 674 discloses an overrun clutch in which there are a plurality of rollers in each tapered notch. In each notch is a spring roller positioned at that end of the tapered notch that is widest. The remaining rollers in each notch are not spring rollers. The purpose of each spring roller is to push all the remaining rollers in the tapered notch towards the small end of the notch. Hence it is impossible for this clutch to carry out the two-step transmission since the spring rollers are never in engagement with the small end of the notches in which they are housed.

## Claims

1. An over run clutch comprising: a cylindrical drive member (9) having a plurality of taper notches (9a) in its inner circumference; a rotating shaft (2) arranged to form wedge shaped spaces (11) between itself and the inner circumference of said driver member; rollers (4, 10) arranged movably in said wedge shaped spaces so that power is transmitted from said drive member (9) to said rotating shaft (2) through said rollers only in one rotational direction of said drive member, there being only one roller in each wedge shaped space, each roller having its own individual spring means (5) for biasing it towards the smallest end of its wedge shaped space, characterized in that the rollers are divided into at least two groups; the rollers (4) of one group have a first elasticity and the rollers (10) of another group have a second elasticity, the rollers of the first elasticity and of the second elasticity being arranged in such a pattern, preferably alternating, as to create a stepped transmission for damping shock load during power transmission until the clutch fully coupled state.

2. A clutch as in Claim 1 in which there are two groups of rollers, the wedge shaped recesses containing a roller of the first group alternating with the wedge shaped recesses containing a roller of the second group.

3. A clutch as claimed in Claim 1 or Claim 2 in which the rollers of one group comprise hollow cylindrical members having a first elasticity and the rollers of the other group comprise non-hollow cylindrical members having a second elasticity.

## Patentansprüche

1. Freilaufkupplung mit einem zylindrischen Antriebselement (9), das an seinem inneren Umfang eine Vielzahl sich verjüngender Nuten (9a) aufweist, einer rotierenden Welle (2), die zusammen mit dem inneren Umfang des Antriebselementes keilförmige Räume (11) bildet, mit Walzen (4, 10), die derart beweglich in den keilförmigen Räumen angeordnet sind, daß sie Kraft von dem Antriebselement (9) auf die rotierende Welle (2) nur in einer Drehrichtung des Antriebselementes übertragen, wobei nur eine Walze im jedem keilförmigen Raum angeordnet ist, und wobei die Walze mit einem eigenen Federelement (5) versehen ist, um sie in Richtung des schmäleren Endes des keilförmiges Raumes zu drücken, dadurch gekennzeichnet, daß die Walzen in mindestens zwei Gruppen aufgeteilt sind; wobei die Walzen (4) einer Gruppe eine erste Elastizität und die Walzen (10) einer anderen Gruppe eine zweite Elastizität aufweisen, wobei die Walzen mit der ersten Elastizität und mit der zweiten Elastizität nach einem derartigen Muster vorzugsweise abwechselnd angeordnet sind, um eine abgestufte Kraftübertragung zur Dämpfung von Stoßbeanspruchung unter Last zu erzeugen, bis such die Kupplung in einem völlig gekuppelten Zustand befindet.

2. Freilaufkupplung nach Anspruch 1, bei welcher zwei Gruppen von Walzen vorgesehen sind, wobei abwechselnd eine Walze der ersten Gruppe und eine Walze der zweiten Gruppe in den hintereinanderliegenden keilförmigen Aussparungen angeordnet sind.

3. Freilaufkupplung nach Anspruch 1 oder 2, bei welcher die Walzen der einen Gruppe hohle zylindrische Elemente umfassen, die eine erste Elastizität besitzen, und die Walzen der anderen Gruppe massive zylindrische Elemente umfassen, die eine zweite Elastizität besitzen.

## Revendications

1. Accouplement à roue libre, comprenant: un organe cylindrique d'entraînement (9) présentant de multiples encoches tronconique (9a) dans sa circonférence interne; un arbre rotatif (2), agencé pour former des espaces cunéiformes (11) entre lui-même et la circonférence interne dudit organe d'entraînement; des rouleaux (4, 10) logés avec mobilité dans lesdits espaces cunéiformes, de telle sorte qu'une puissance soit transmise dudit organe d'entraînement (9) audit arbre rotatif (2) par l'intermédiaire desdits rouleaux, dans l'une seulement des directions de rotation dudit organe d'entraînement, chaque espace cunéiforme renfermant seulement un rouleau, chaque rouleau étant muni de son propre moyen élastique individuel (5) pour le charger vers la plus petite extrémité de son espace cunéiforme, caractérisé par le fait que les rouleaux sont scindés en au moins deux groupes; les rouleaux (4) de l'un des groupes présentent une première élasticité et les rouleaux (10) d'un autre groupe présentent une seconde élasticité, les rouleaux de la première élasticité et de la seconde élasticité étant agencés en une configuration, de préférence alternée, propre à créer une transmission par étapes pour amortir l'effort d'impact, lors de la transmission de puissance, jusqu'à l'état totalement embrayé de l'accouplement.

2. Accouplement selon la revendication 1, dans lequel deux groupes de rouleaux sont prévus, les évidements cunéiformes, renfermant un rouleau du premier groupe, étant en alternance avec les évidements cunéiformes renfermant un rouleau du second groupe.

3. Accouplement selon la revendication 1 ou la revendication 2, dans lequel les rouleaux de l'un des groupes consistent en des pièces cylindriques creuses présentant une première élasticité, et les rouleaux de l'autre groupe consistent en des pièce cylindriques non creuses présentant une seconde élasticité.

1

2